# DEMANDE DE BREVET EUROPEEN

(11) **EP 4 502 441 A1**
(43) Date de publication de la demande: **05.02.2025**
(21) Numéro de dépôt: 24192641.9
(22) Date de dépôt: 02.08.2024
(51) Int. Cl.: F16K 31/122, F16K 41/12, B05B 1/30, F16K 1/48, F16K 31/00

(54) **ENSEMBLE PISTON-DIAPHRAGME POUR UNE VANNE ET PROCÉDÉ DE FABRICATION**

(30) Priorité: 03.08.2023 FR 2308436
(71) Demandeur: Exel Industries, 51200 Epernay (FR)
(72) Inventeur: VANZETTO, Denis, 51200 EPERNAY (FR)
(74) Mandataire: Lavoix

(57) **Abrégé**

Ensemble piston-diaphragme, pour une vanne (3), avec un piston (50), comprenant une tige (52) et un pointeau (90). La tige (52) comprend une gorge de piston (58), avec un bord proximal de gorge (56). Le pointeau (90) est fixé sur une extrémité distale de tige (59). L'ensemble comprend un diaphragme (80), avec un jonc annulaire périphérique (81), un jonc annulaire interne (82), reçu dans la gorge de piston (58) pour y attacher le diaphragme (80), et une membrane annulaire (83), reliant les joncs annulaires. Le pointeau (90) comprend une couronne (93), qui entoure la tige (52) en recouvrant extérieurement le jonc annulaire interne (82) et qui comprend un bord de couronne (95), qui termine la couronne (93) à hauteur du bord proximal de gorge (56). Le diaphragme (80) est radialement interposé entre le bord proximal de gorge (56) et le bord de couronne (95), au contact du bord de couronne (95).

## Description

La présente invention concerne un ensemble piston-diaphragme, une vanne comportant un tel ensemble et un procédé de fabrication d'un tel ensemble.

FR3108378A1 décrit un projecteur de pulvérisation de produit de revêtement, qui comprend une embase, avec un canal interne, dans lequel débouchent un conduit d'entrée et un canal de sortie, pour du produit de revêtement. Un siège est formé dans le canal interne, au débouchant du canal de sortie. Une vanne est montée dans le canal interne de façon à l'obturer vis-à-vis de l'extérieur, de sorte qu'une chambre de produit de revêtement est délimitée par la vanne et le canal interne, dans laquelle débouchent le conduit d'entrée et le canal de sortie. La vanne comprend un corps de vanne, par l'intermédiaire duquel la vanne est attachée à l'embase, une tige mobile en translation dans le corps de vanne et un pointeau fixé à l'extrémité de la tige. En fonction de la position de la tige, le pointeau peut prendre appui sur le siège pour obture le canal de sortie et être distant du siège pour ne pas obturer le canal de sortie. Pour éviter que le produit de revêtement présent dans la chambre de produit de revêtement ne remonte à travers le corps de vanne le long de la tige, la vanne comporte une membrane, parfois appelée diaphragme, entourant la tige, solidarisée au corps de vanne par un jonc torique et à la tige par un autre jonc torique, un voile élastiquement déformable étant déployé entre les joncs.

Si ce type de vanne donne généralement satisfaction pour la manipulation de produit de revêtement ou d'autres fluides sous pression, une panne courante consiste en une fuite de fluide sous pression au niveau du jonc attachant le diaphragme à la tige, sous l'effet d'une accumulation progressive de résidus de fluide entre le diaphragme et le pointeau, tendant à déformer ou à détériorer le jonc. En effet, par déformation élastique du diaphragme au cours de l'utilisation de la vanne, un interstice est susceptible d'être accidentellement ouvert entre le diaphragme et le pointeau. Cet interstice ouvert autorise alors l'introduction de débris entre le diaphragme et le pointeau, ces débris maintenant l'interstice ouvert, autorisant alors davantage de débris à s'accumuler à cet endroit, jusqu'à déformer ou détériorer suffisamment le jonc pour créer une fuite de fluide sous pression.

Le but de l'invention est alors de proposer un nouvel ensemble piston-diaphragme pour lequel le risque de fuite au niveau d'un jonc annulaire interne du diaphragme est réduit.

A cet effet, l'invention a pour objet un ensemble piston-diaphragme, pour une vanne. L'ensemble comprend un piston, comprenant une tige, qui s'étend parallèlement à une direction distale, la tige étant destinée à être reçue dans un conduit central d'un corps de la vanne, de façon coulissante par rapport au corps parallèlement à la direction distale, la tige comprenant une gorge de piston, entourant la tige et étant ouverte radialement vers l'extérieur, la gorge de piston comprenant un bord proximal de gorge et un bord distal de gorge entre lesquels la gorge de piston est délimitée, le bord distal de gorge étant décalé dans la direction distale par rapport au bord proximal de gorge. Le piston comprend un pointeau, qui est fixé sur une extrémité distale de tige, appartenant à la tige, et qui est configuré pour venir en appui contre un siège d'obturation suivant la direction distale pour obturer un conduit de fluide pressurisé. L'ensemble comprend un diaphragme, comprenant un jonc annulaire périphérique, pour attacher le diaphragme au corps de la vanne, le jonc annulaire périphérique entourant le piston, un jonc annulaire interne, qui entoure le piston et qui est reçu dans la gorge de piston pour ainsi attacher le diaphragme au piston, et une membrane annulaire, qui relie le jonc annulaire périphérique au jonc annulaire interne.

Le pointeau comprend une couronne, qui entoure la tige en recouvrant extérieurement le jonc annulaire interne et qui comprend un bord de couronne, qui termine la couronne en sens opposé de la direction distale, le bord de couronne étant agencé à hauteur du bord proximal de gorge, le diaphragme étant radialement interposé entre le bord proximal de gorge et le bord de couronne, en étant en contact avec le bord de couronne.

Une idée à la base de l'invention est de prévoir que la couronne du pointeau recouvre le jonc annulaire interne dans une large mesure, pour éviter que ne puisse s'ouvrir un interstice entre le diaphragme et la couronne, en particulier quelle que soit la déformation élastique impartie sur le diaphragme par un fluide sous pression durant l'utilisation de la vanne. La couronne du pointeau recouvre le jonc annulaire interne dans une large mesure en ce que le bord de couronne est agencé à hauteur du bord proximal de gorge. Le pointeau recouvre avantageusement le jonc annulaire interne sur toute sa hauteur, voire recouvre également une partie de la membrane annulaire, contrairement à l'art antérieur qui ne prévoit pas un recouvrement, ou prévoit seulement un recouvrement marginal, du jonc annulaire interne par le pointeau.

Suivant d'autres aspects avantageux de l'invention, l'invention met oeuvre une ou plusieurs des caractéristiques suivantes, prises isolément ou suivant toutes les combinaisons techniquement possibles.

De préférence, la couronne comprend une embase, qui est adjacente au bord distal de gorge.

De préférence, la couronne comprend une surface conique intérieure, qui relie l'embase au bord de couronne, qui converge suivant la direction distale, la couronne étant en appui oblique en sens opposé de la direction distale contre le diaphragme par l'intermédiaire la surface conique intérieure.

De préférence, la couronne comprend une surface courbe concave intérieure, qui relie l'embase au bord de couronne, qui converge suivant la direction distale, la couronne étant en appui oblique en sens opposé de la direction distale contre le jonc annulaire interne par l'intermédiaire de la surface courbe concave intérieure.

De préférence, la couronne comprend un chanfrein intérieur qui converge suivant la direction distale, et qui est adjacent au bord distal de gorge.

De préférence, le pointeau comprend une interface proximale de fixation, formant un conduit interne, par l'intermédiaire duquel le pointeau est fixé à la tige, préférentiellement par emmanchement de l'extrémité distale de tige dans l'interface proximale de fixation suivant la direction distale, la couronne s'étendant à partir de l'interface proximale de fixation, en sens opposé de la direction distale.

De préférence, le bord proximal de gorge est radialement plus large que le bord distal de gorge.

De préférence, la gorge de piston présente une section radiale en portion de cercle, du bord distal de gorge au bord proximal de gorge.

L'invention a également pour objet une vanne, comprenant l'ensemble piston-diaphragme tel que défini ci-avant. La vanne comprend un corps, ayant un conduit central coaxial avec un axe central et débouchant à une extrémité distale de corps appartenant au corps. Le piston est coulissant par rapport au corps suivant l'axe central, entre une position distale et une position proximale, la direction distale du piston étant parallèle à l'axe central. La tige est reçue dans le conduit central, en dépassant du conduit central à partir de l'extrémité distale de corps lorsque le piston est dans la position distale. Le pointeau est agencé hors du conduit central, en étant décalé dans la direction distale par rapport à l'extrémité distale de corps, que le piston soit dans la position proximale ou dans la position distale. Le jonc annulaire périphérique attache le diaphragme à l'extrémité distale de corps. Le diaphragme sépare le conduit central d'une chambre de fluide pressurisé délimitée par-delà le diaphragme dans la direction distale, et est configuré pour être élastiquement déformé entre : une forme initiale, lorsque le piston est dans la position distale et qu'aucune surpression ne survient dans la chambre de fluide pressurisé par rapport au conduit central, et des formes en étirement, sous l'effet d'une surpression survenant dans la chambre de fluide pressurisé par rapport au conduit central. Le bord de couronne est en contact avec le diaphragme, que le diaphragme soit dans la forme initiale ou dans l'une des formes en étirement, et que le piston soit en position distale ou en position proximale.

L'invention a également pour objet un procédé de fabrication de l'ensemble piston-diaphragme tel que défini ci-avant. Le procédé comprend: un enfilement du jonc annulaire interne sur la tige, alors que le pointeau n'est pas encore fixé sur la tige, l'enfilement du jonc annulaire interne étant effectué via l'extrémité distale de tige et jusqu'à ce que le jonc annulaire interne soit reçu dans la gorge de piston pour attacher le diaphragme à la tige. Le procédé comprend, alors que le jonc annulaire interne est reçu dans la gorge de piston, une fixation du pointeau sur l'extrémité distale de tige, de sorte que la couronne entoure la tige en recouvrant extérieurement le jonc annulaire interne, et de sorte que le diaphragme soit radialement interposé entre le bord proximal de gorge et le bord de couronne, en étant en contact avec le bord de couronne.

De préférence, le procédé comprend un positionnement d'un capuchon provisoire sur l'extrémité distale de tige, alors que le pointeau n'est pas encore fixé sur la tige et que le jonc annulaire interne n'est pas encore enfilé sur la tige, le capuchon provisoire recouvrant l'extrémité distale de tige, l'enfilement du jonc annulaire interne sur la tige étant effectué par l'intermédiaire du capuchon provisoire, avec coulissement du jonc annulaire interne le long d'une surface fuselée externe du capuchon provisoire, la surface fuselée externe étant convergente suivant la direction distale. De préférence, le procédé comprend un retrait du capuchon provisoire, alors que le jonc annulaire interne est reçu dans la gorge de piston et avant la fixation du pointeau sur l'extrémité distale de tige.

L'invention apparaîtra plus clairement à la lecture de la description qui va suivre, donnée uniquement à titre d'exemple non limitatif, et faite en référence aux dessins dans lesquels :
[Fig 1] La figure 1 est une vue en coupe longitudinale d'un appareil à fluide pressurisé comprenant une vanne avec un piston dans une position distale et un diaphragme dans une forme initiale ;
[Fig 2] La figure 2 est une vue similaire à celle de la figure 1, avec le piston dans la position distale et le diaphragme dans une forme en étirement distale ;
[Fig 3] La figure 3 est une vue agrandie d'un détail de la figure 2 ;
[Fig 4] La figure 4 est une vue similaire à celle des figures 1 et 2, avec le piston dans une position proximale et le diaphragme dans une forme en étirement proximale ;
[Fig 5] La figure 5 est une vue similaire à celle des figures 1, 2 et 4, montrant une étape d'un procédé de fabrication d'un ensemble piston-diaphragme appartenant à la vanne.

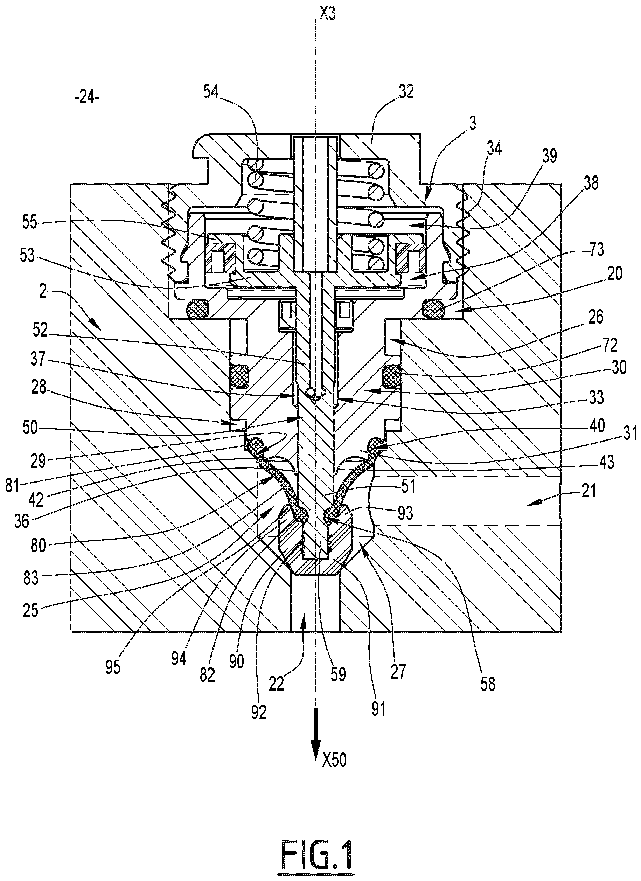

Les figures 1 à 4 représentent une partie d'un appareil pour appliquer un produit de revêtement. Cet appareil est par exemple d'un pulvérisateur de peinture, de vernis, de revêtement anticorrosion, ou de tout autre type de produit de revêtement envisageable. L'appareil est un type particulier d'appareil à fluide pressurisé, mettant en oeuvre au moins deux fluides pressurisés, à savoir le produit de revêtement ou d'autres produits utilisés dans le contexte du revêtement, par exemple un solvant ou des constituants du produit de revêtement, et un fluide de commande, par exemple de l'air comprimé. Le produit de revêtement est un fluide pressurisé en ce qu'il est mis en oeuvre sous une pression comprise entre 1 et 16 bar, de préférence entre 2 et 10 bar, dans l'appareil. Cela s'applique également au cas d'un solvant ou d'un constituant de produit de revêtement. Le fluide de commande est un fluide pressurisé en ce qu'il est mis en oeuvre sous une pression comprise entre 1 et 10 bar, de préférence entre 2 et 6 bar dans l'appareil.

L'appareil comprend une vanne 3. La vanne 3 est particulièrement adaptée pour être installée dans un appareil d'application de produit de revêtement tel que décrit ici, mais peut aussi être utilisée avec d'autres types d'appareils à fluide pressurisé, tels que des appareils pneumatiques ou hydrauliques, mettant en oeuvre un ou plusieurs autres fluides pressurisés que ceux décrits ici. Dans le présent exemple, la vanne 3 vise à sélectivement interrompre et autoriser un flux de fluide pressurisé qui est un produit de revêtement. Dans les autres cas d'application de la vanne 3 précités, ce fluide pressurisé particulier peut être remplacé par un autre.

Une base 2, qui appartient à l'appareil ou à la vanne 3, forme un alésage 20 et deux conduits de fluide pressurisé, dont un conduit d'arrivée 21 pour le produit de revêtement, et un conduit de refoulement 22 pour le produit de revêtement. Les conduits 21 et 22 débouchent dans l'alésage 20. L'alésage 20 débouche sur un extérieur 24 de l'appareil, c'est-à-dire est avantageusement ouvert à l'air libre. La vanne 3 est fixement reçue dans l'alésage 20 en obturant l'alésage 20. La vanne 3 et l'alésage 20 définissent un axe central X3 commun. L'axe central X3 traverse l'alésage 20 depuis le débouchant jusqu'au fond de l'alésage 20. Dans le cas présent, le conduit de refoulement 22 est centré sur l'axe X3. On définit également une direction distale X50, dirigée parallèlement à l'axe X3, en direction du fond de l'alésage 20. Sauf mention du contraire, les termes tels que « distal », « proximal », « radialement » et « axialement » sont indiqués en référence à l'axe X3 et à la direction X50.

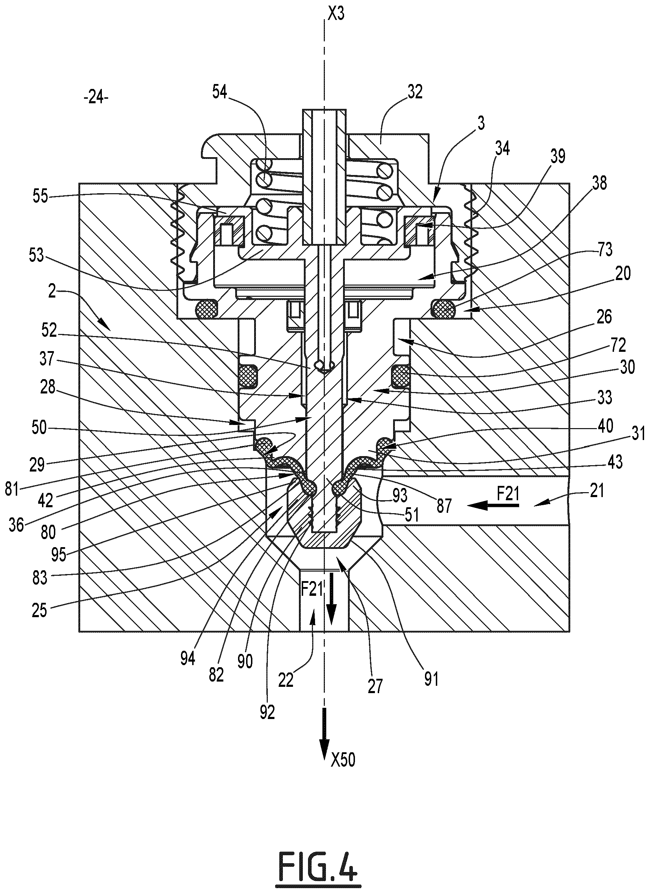

Les conduits 21 et 22 débouchent dans une zone de l'alésage 20 qui délimite une chambre de fluide pressurisé 25, ici le produit de revêtement. Un siège d'obturation 27 est formé au débouchant du conduit 22 dans la chambre 25, ici coaxialement avec l'axe X3. Comme montré sur la figure 4, un flux F21 de fluide pressurisé, qui est ici du produit de revêtement, est destiné à circuler successivement dans le conduit 21, la chambre 25 et le conduit 22, via le siège 27, lorsque la vanne 3 est dans une configuration ouverte. Lorsque la vanne 3 est dans une configuration fermée comme montré sur les figures 1 à 3, le flux F21 est interrompu par la vanne 3, qui obture le siège 27.

Un conduit de fluide de commande, non illustré, débouche dans une zone de l'alésage 20 qui délimite une chambre 26, dite « chambre de commande périphérique », qui s'étend entre la chambre 25 et le débouché de l'alésage 20 sur l'extérieur 24. Un flux de fluide de commande circule entre le conduit de fluide de commande et la chambre de commande périphérique 26 pour commander mécaniquement la vanne 3. Le fluide de commande peut être de l'air sous pression.

La vanne 3 comprend un corps 30. L'axe central X3 est fixe par rapport au corps 30. Suivant l'axe X3, le corps 30 présente une extrémité distale 31 dite « extrémité distale de corps » et une extrémité proximale 32 dite « extrémité proximale de corps », opposées et traversées par l'axe X3.

La vanne 3 est reçue et fixée dans l'alésage 20, par l'intermédiaire du corps 30. Pour être fixé à l'alésage 20, le corps 30 comprend avantageusement un filetage extérieur 34, ici centré sur l'axe X3, ou tout autre moyen de fixation approprié, coopérant avec un moyen de fixation complémentaire appartenant à la base 2, ici un filetage intérieur complémentaire du filetage extérieur 34, formé à l'intérieur de l'alésage 20 à proximité du débouchant. Dans l'exemple, le filetage 34 est disposé à l'extrémité proximale 32.

Ainsi reçue dans l'alésage 20, la vanne 3 délimite, avec l'alésage 20, la chambre de fluide pressurisé 25, au fond de l'alésage 20, dans la direction distale X50 par rapport à la vanne 3.

L'extrémité proximale de corps 32 est disposée au débouchant de l'alésage 20, en donnant sur l'extérieur 24. La chambre de commande 26 est délimitée radialement entre le corps 30 et l'alésage 20 de la base 2. De préférence, une chambre périphérique 28, dite « chambre d'évent », est délimitée radialement entre le corps 30 et l'alésage 20 de la base 2, axialement entre la chambre 25 et la chambre 26. En particulier, le filetage 34 est disposé entre l'extrémité proximale 32 et la chambre de commande 26.

Le corps 30 forme un conduit central 33, qui est coaxial avec l'axe X3 et traversé par l'axe X3 sur toute sa longueur. Le conduit 33 traverse le corps 30 de part en part. Le conduit central 33 débouche à l'extrémité distale de corps 31 et à l'extrémité proximale de corps 32.

A l'extrémité distale de corps 31, le conduit central 33 définit une extrémité distale de conduit 36, qui termine le conduit central 33 et qui débouche à l'extrémité distale de corps 31. En sens opposé de la direction distale X50, à partir de l'extrémité distale de conduit 36, et successivement le long de l'axe X3, le conduit central 33 délimite avantageusement, à l'intérieur du corps 30, une chambre intermédiaire 37, une chambre de commande 38 et une chambre proximale 39. Ces chambres 37, 38 et 39 sont traversées par l'axe X3.

La vanne 3 comprend en outre un piston 50.

Le piston 50 est reçu dans le conduit central 33 et est configuré pour coulisser par rapport au corps 30 suivant l'axe X3, en étant guidé par le conduit central 33 pour ce coulissement. Le piston 50 coulisse entre une position distale, qui est une position de fermeture, pour ainsi obtenir la configuration de fermeture de la vanne 3 montrée sur les figures 1 à 3, et une position proximale, qui est une position d'ouverture, pour ainsi obtenir la configuration d'ouverture de la vanne 3 montrée sur la figure 4. En position distale, le piston 50 est décalé dans la direction X50 par rapport à la position proximale. Dans ces positions, le piston 50 dépasse hors du conduit central 33 suivant la direction X50, à partir de l'extrémité distale de conduit 36 et, donc à partir de l'extrémité distale de corps 31, dans la chambre 25.

La vanne 3 comprend en outre un diaphragme 80. Le diaphragme 80 est une pièce élastiquement déformable, contrairement à d'autres pièces telles que le piston 50 et le corps 30, qui sont rigides.

Le diaphragme 80 comprend un jonc annuaire périphérique 81, pour attacher le diaphragme 80 à l'extrémité distale de corps 31 et entourant le piston 50. Le diaphragme 80 comprend un jonc annulaire interne 82, attachant le diaphragme 80 au piston 50 et entourant le piston 50. Le diaphragme 80 comprend une membrane annulaire 83, reliant radialement le jonc annulaire périphérique 81 au jonc annulaire interne 82, en formant une surface continue tout autour du piston 50. Ainsi, le diaphragme 80, notamment grâce à la membrane 83, sépare le conduit central 33 de la chambre de fluide pressurisé 25, délimitée par-delà le diaphragme 80 dans la direction X3. Les joncs 81 et 82 sont préférentiellement tous deux centrés sur l'axe X3. Chaque jonc 81 et 82 est préférentiellement de forme circulaire autour de l'axe X3 et s'étend dans un plan respectif perpendiculaire à l'axe X3. Le jonc 82 est mobile en même temps que le piston 50 en étant attaché au piston 50, alors que le jonc 81 est fixe quelle que soit la position du piston 50 en étant attaché au corps 30. La membrane 83 se déforme élastiquement de façon à toujours relier les joncs 81 et 82, quelle que soit la position du piston 50 par rapport au corps 30.

Le diaphragme 80 présente une géométrie de révolution autour de l'axe X3, c'est-à-dire qu'il présente avantageusement une section radiale identique ou proche tout autour de l'axe X3.

Le diaphragme 80 est traversé par le piston 50, qui traverse le jonc annulaire interne 82 pour dépasser dans la chambre 25. Le diaphragme 80 et le fond de l'alésage 20 délimitent ensemble la chambre 25. Autrement dit, le diaphragme 80 borde la chambre 25. Le diaphragme 80 assure une étanchéité dynamique au fluide sous pression autour du piston 50, entre la chambre 25 et l'extrémité distale de corps 31, en particulier entre la chambre 25 et le conduit central 33. De préférence, c'est aussi le diaphragme 80 qui obture l'alésage 20, autour du corps 30, vis-à-vis de l'extérieur 24, comme détaillé ci-après.

De préférence, l'extrémité distale de corps 31 forme un berceau annulaire 43 et, préférentiellement, une gorge de corps 40. Le berceau annulaire 43 est formé autour de l'extrémité distale de conduit 36. La gorge de corps 40 est formée autour du berceau 43, et donc, autour de l'extrémité distale de conduit 36. La gorge 40 s'étend tout autour du corps 30, autour de l'axe X3, suivant un plan perpendiculaire à l'axe X3. La gorge 40 borde le berceau 43 sur tout le pourtour extérieur du berceau 43, de façon à délimiter le berceau 43. De préférence, la gorge de corps 40 est ouverte vers l'extérieur.

On prévoit avantageusement que le jonc annulaire périphérique 81 est reçu dans la gorge de corps 40, pour être positionné de façon sûre sur le corps 30. De préférence, le jonc 81 est maintenu dans un état légèrement déformé par la gorge de corps 40, en ce que la gorge de corps 40 est en appui radialement vers l'extérieur sur le jonc 81, par rapport à l'axe central X3. Le jonc 81 est ainsi maintenu dans l'état déformé, où le jonc 81 est élastiquement étiré radialement vers l'extérieur, par rapport à l'axe central X3. Dans un état non-déformé, le jonc 81 présente préférentiellement une section radiale circulaire, c'est-à-dire est torique. Dans l'état déformé montré aux figures 1 à 4, le jonc 81 est préférentiellement légèrement aplati par la gorge de corps 40 pour une partie du jonc annulaire périphérique 81 contre laquelle la gorge de corps 40 est en appui radialement vers l'extérieur. Le jonc 81 est ainsi légèrement maintenu sur le corps par la gorge 40, notamment en cours d'assemblage lorsque le corps 30 n'est pas encore reçue dans l'alésage 20.

De préférence, pour fixer le jonc annulaire périphérique 81 au corps 30 tout en délimitant la chambre 25 de façon étanche au produit de revêtement, le jonc annulaire périphérique 81 est radialement interposé entre le corps 30 et l'alésage 20. Le jonc 81 sépare ainsi la chambre 25 du reste de l'alésage 20 et est maintenu dans la gorge 40 par l'alésage 20. Du fluide pressurisé présent dans la chambre 25 ne peut alors pas s'échapper vers l'extérieur 24 en longeant le corps 30. En particulier, l'alésage 20 comprend une surface conique interne 29, qui est centrée sur l'axe X3 et qui converge suivant la direction X50. La surface 29 est en appui oblique, suivant l'axe X3, en sens opposé de la direction X50, contre le jonc annulaire périphérique 81. Ainsi le jonc 81 est interposé radialement entre la surface 29 et la gorge 40 pour assurer l'étanchéité de la chambre 25. En particulier, le jonc 81 sépare fluidiquement la chambre 25 de la chambre d'évent 28, qui sont adjacentes audit jonc 81. Le jonc 81 évite donc une fuite de produit de revêtement de la chambre 25 vers la chambre d'évent 28, voir vers la chambre de commande 26. En variante, on prévoit que ce n'est pas le jonc 81 qui assure cette étanchéité, mais un joint statique distinct du diaphragme, radialement interposé entre le corps 30 et l'alésage 20.

De préférence, pour faciliter le montage du jonc 81 dans la gorge de corps 40, la gorge de corps 40 est ouverte, non seulement vers l'extérieur, mais aussi suivant la direction distale X50. Le jonc 81 est néanmoins maintenu en place dans la gorge 40 grâce à la mise en appui de l'alésage 20 contre le jonc 81.

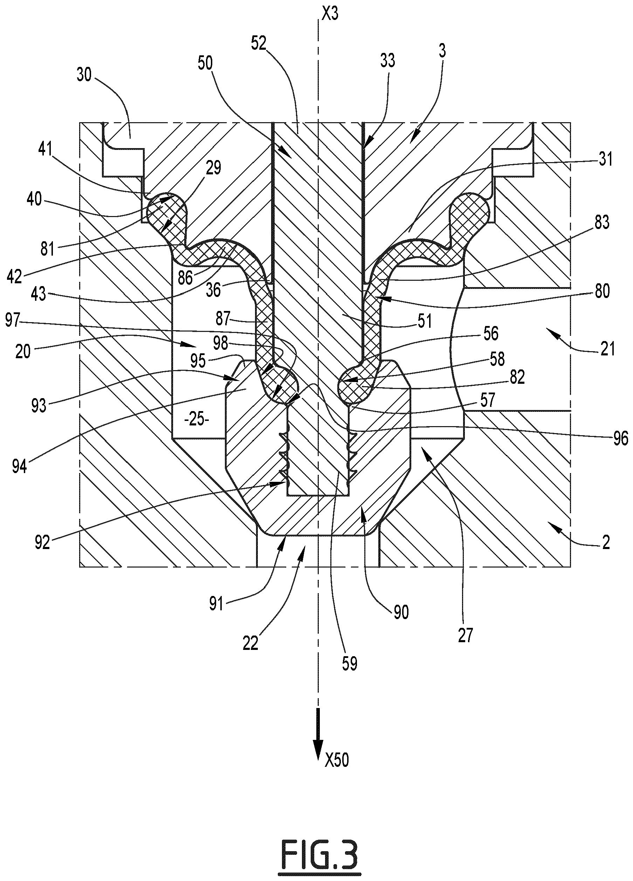

Plus en détail, comme mieux visible sur la figure 3, la gorge de corps 40 comprend un bord proximal de gorge 41 et un bord distal de gorge 42, entre lesquels la gorge de corps 40 est délimitée. Le bord 41 forme une arête saillante circulaire qui s'étend autour de l'axe X3, suivant un plan perpendiculaire à l'axe X3. Le bord 42 est décalé dans la direction X50 par rapport au bord 41. Le bord 42 forme une arête saillante circulaire qui s'étend autour de l'axe X3, suivant un plan perpendiculaire à l'axe X3. Le bord 42 marque la frontière entre la gorge 40 et le berceau annulaire 43. Le bord 41 est de plus grand diamètre que le bord 42, et le bord 42 est disposé dans la direction X50 par rapport au bord 41. De préférence, la gorge 40 présente un profil radial qui, à partir du bord 42, est d'abord parallèle ou quasiment parallèle à l'axe X3, puis qui tourne vers l'extérieur jusqu'au bord 41. Autrement dit, la gorge 40 est en creux en sens opposé de la direction distale X50, mais n'est pas ou peu en creux radialement vers l'intérieur, ce qui facilite l'introduction du jonc 81 dans la gorge 40 en sens opposé de la direction distale X50.

Pour délimiter la chambre de commande 26 de façon étanche au fluide de commande, la vanne 3 comporte avantageusement un joint statique 72 et un joint statique 73, qui sont par exemple des joints toriques. La chambre 26 est axialement délimitée par les joints 72 et 73, en s'étendant axialement entre les joints 72 et 73. Chaque joint 72 et 73 entoure le corps 30 sur tout son pourtour, autour de l'axe X3. Chaque joint 72 et 73 est interposé entre le corps 30 et l'alésage 20, radialement par rapport à l'axe X3. En particulier, le joint 72 est axialement disposé entre le jonc 81 et le joint 73. Le joint 72 sépare fluidiquement la chambre 26 de la chambre d'évent 28, qui sont adjacentes au joint 72, pour éviter que du fluide de commande provenant de la chambre 26 ne s'échappe jusqu'à la chambre d'évent 28, voire jusqu'à la chambre 25, en s'écoulant le long du corps 30. Le joint 73 sépare la chambre 26 du débouchant de l'alésage 20. Le joint 73 évite donc une fuite de fluide de commande de la chambre 26 vers le filetage 34, voire vers l'extérieur 24.

Le berceau annulaire 43 du corps 30 s'étend radialement entre le conduit central 33 et le jonc annulaire périphérique 81, en particulier entre la gorge de corps 40 et l'extrémité distale de conduit 36. Plus précisément, le berceau 43 est délimité, intérieurement, par l'extrémité distale de conduit 36 et, extérieurement, par le bord distal de gorge 42. Le berceau annulaire 43 présente avantageusement une forme de révolution autour de l'axe X3. De préférence, le berceau annulaire 43 présente une section radiale arrondie, en creux en sens opposé de la direction X50. Plus précisément, la section radiale arrondie présente une courbure en creux sans ondulation. Plus généralement, comme montré aux figures, le berceau annulaire 43 est concave en direction de la membrane annulaire 83. De préférence, l'extrémité 36, qui forme un bord circulaire bordant le berceau 43 par l'intérieur, est agencée dans la direction X50 par rapport au bord 42, qui borde le berceau 43 par l'extérieur. Le bord 42 est avantageusement de plus grand diamètre que l'extrémité 36. La section radiale arrondie relie l'extrémité 36 au bord 42.

Le piston 50 comprend avantageusement, une tige 52 et un pointeau 90.

La tige 52 s'étend parallèlement à la direction X50 et est coaxiale avec l'axe X3. La tige est reçue dans le conduit central 33. En particulier, la tige 52 émerge dans la chambre 25, puis traverse successivement l'extrémité distale de conduit 36 et la chambre intermédiaire 37, et émerge dans la chambre de commande 38. De préférence, le piston 50 est guidé en coulissement par coulissement radial de la tige 52 le long d'une paroi de la chambre intermédiaire 37. Autrement dit, le piston 50 est guidé en coulissement par l'intermédiaire de la tige 52, par le conduit central 33 du corps 30.

La tige 52 comprend, successivement suivant la direction X50, une partie 51, une gorge de piston 58 et une extrémité distale de tige 59.

Il est avantageusement prévu que la partie 51 coopère avec le conduit 33 pour que la tige 52 guide le coulissement du piston 50. En position distale du piston 50 comme montré sur les figures 1 à 3, la partie 51 dépasse hors du conduit 33 suivant la direction X50, c'est-à-dire s'étend par-delà l'extrémité 31 et l'extrémité 36. En position proximale du piston 50 comme montré sur la figure 4, la partie 51 est escamotée à l'intérieur du conduit 33, de préférence entièrement, ou quasiment entièrement.

La gorge de piston 58 est agencée de façon à être hors du conduit central 33, quelle que soit la position du piston 50. La gorge de piston 58 entoure la tige 52 sur tout son pourtour autour de l'axe central X3 et est ouverte radialement vers l'extérieur par rapport à l'axe central X3. La gorge de piston 58 s'étend avantageusement suivant un plan perpendiculaire à l'axe X3.

Comme mieux visible sur la figure 3, la gorge de piston 58 comprend un bord proximal de gorge 56 et un bord distal de gorge 57, entre lesquels la gorge de piston 58 est délimitée. Le bord 57 est décalé dans la direction distale X50 par rapport au bord 56. Le bord 56 forme avantageusement une arête saillante circulaire qui s'étend autour de l'axe X3, suivant un plan perpendiculaire à l'axe X3. Le bord 56 présente préférentiellement un profil radial en congé arrondi pour ne pas être coupant. Le bord 56 marque la frontière entre la gorge 58 et la partie 51. Le bord 57 est décalé dans la direction X50 par rapport au bord 56. Le bord 57 forme une arête saillante circulaire qui s'étend autour de l'axe X3, suivant un plan perpendiculaire à l'axe X3. Le bord 57 marque la frontière entre la gorge 58 et l'extrémité distale de tige 59. De préférence, la gorge de piston 58 présente une section radiale en portion de cercle, en creux, du bord 56 au bord 57. Autrement dit, la gorge 58 décrit une portion de tore autour de l'axe X3.

Pour que le diaphragme 80 soit attaché au piston 50, le jonc annulaire interne 82 est reçu dans la gorge de piston 58. De préférence, le jonc 82 est maintenu dans un état légèrement déformé par la gorge de piston 58, en ce que la gorge de piston 58 est en appui radialement vers l'extérieur sur le jonc 82, par rapport à l'axe central X3. Le jonc 82 est ainsi maintenu dans l'état déformé, où le jonc 82 est élastiquement étiré radialement vers l'extérieur, par rapport à l'axe central X3. Dans un état non-déformé, le jonc 82 présente préférentiellement une section radiale elliptique, à l'oblique, en convergeant dans la direction X50. Dans l'état déformé montré aux figures 1 à 4, le jonc 82 est préférentiellement arrondi par la gorge de piston 58 pour une partie du jonc annulaire 82 contre laquelle la gorge 58 est en appui radialement vers l'extérieur. Le jonc 82 est ainsi attaché à la tige 52 par la gorge 58, notamment en cours d'assemblage lorsque le pointeau 90 n'est pas encore fixé à la tige 52.

On prévoit avantageusement que le bord proximal de gorge 56 est radialement plus large que le bord distal de gorge 57, ce qui facilite le montage du jonc 82 sur la tige 52 par enfilement en sens opposé de la direction X50, via l'extrémité distale 59 comme expliqué ci-après. Néanmoins, contrairement à la gorge 40, on prévoit avantageusement que la gorge 58 est en creux radialement vers l'intérieur, pour que le jonc 82 soit attaché à la tige par la gorge 58, même lorsque le pointeau 90 n'est pas encore en place.

La membrane 83 est d'épaisseur constante, ou avec de légères variations du jonc 81 au jonc 82. Le diaphragme 80, notamment la membrane 83, est configuré pour être élastiquement déformé en fonction de la position courante du piston 50 et de la survenance d'une surpression de fluide pressurisé dans la chambre 25 vis-à-vis du conduit central 33. De préférence, la membrane 83 présente une forme de révolution autour de l'axe X3.

Par « survenance d'une surpression », on entend que du fluide pressurisé 25 est présent dans la chambre 25 avec une pression d'une valeur supérieure à celle de la pression d'un fluide, qui peut être de l'air, présent de l'autre côté du diaphragme 80, notamment dans le conduit central 33. Dans ce cas, la différence de valeur entre la pression du fluide pressurisé dans la chambre 25 et dans le conduit 33 est supérieure à un certain seuil de différentiel de pression, non négligeable. Lorsque la différence de valeur entre la pression du fluide pressurisé dans la chambre 25 et dans le conduit 33 est inférieure à un seuil de différentiel de pression donné, tendant vers zéro, on considère qu'il s'agit d'une absence de surpression.

En particulier, le diaphragme 80 adopte une forme initiale, montrée sur la figure 1, lorsque qu'aucune surpression ne survient dans la chambre 25 par rapport au conduit central 33 et que le piston est dans la position distale. La forme initiale peut être considérée comme une position de repos du diaphragme 80, vers laquelle le diaphragme revient naturellement par élasticité lorsque les pressions dans la chambre 25 et dans le conduit 33 sont de valeur proche ou identiques. Dans cette forme initiale, la membrane annulaire 83 est distante du berceau 43, de préférence sur toute la surface de la membrane annulaire 83. De préférence, la membrane annulaire 83 est également distante de la tige 52, notamment de la partie 51 de la tige 52. Eventuellement, la membrane 83 est au contact de la tige seulement au niveau du bord 56 et au contact du berceau 43 seulement au niveau du bord 42. Un volume annulaire est ainsi ménagé entre la membrane annulaire 83 et le berceau 43, entre les bords 42 et 56. Dans cette forme initiale, comme montré sur la figure 1, la membrane 83 présente préférentiellement une forme générale évasée ou conique, éventuellement courbée en direction du berceau 43, de préférence sans ondulation.

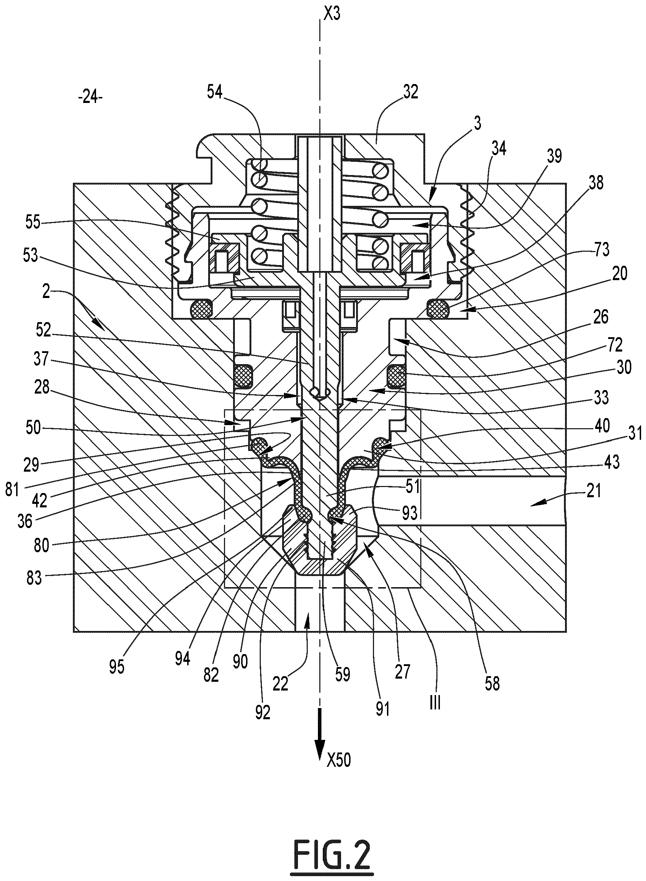

Comme montré sur les figures 2 à 4, lorsqu'une surpression survient dans la chambre 25 par rapport au conduit 33, le diaphragme 80 est élastiquement déformée vers une forme en étirement. Selon la situation, et notamment, selon la position du piston 50, la forme en étirement peut être différente. Dans toutes les formes en étirement qui peuvent être adoptées, la membrane annulaire 83 vient en contact avec, et épouse, le berceau annulaire 43, sous l'effet de la surpression, qui plaque la membrane annulaire 83 contre le berceau annulaire 43. Epousant le berceau 43, la membrane 83 prend une forme qui est complémentaire avec celle du berceau. Pour obtenir l'une des formes en étirement, il est nécessaire que la surpression soit suffisamment intense pour élastiquement déformer la membrane 83 jusqu'à la mise en appui de la membrane 83 contre le berceau annulaire 43 en sens opposé de la direction X50. Le berceau 43 recevant ainsi la membrane 83 en appui en sens opposé de la direction X50, il retient la membrane 83 contre l'effet de la surpression, afin que la membrane 83 ne soit pas excessivement étirée. Cela évite une détérioration de la membrane en cas d'une surpression trop importante. Par ailleurs, la forme du berceau 43 assure que la membrane 83 soit déformée exactement selon la forme souhaitée, donnée par le berceau 43, puisque la membrane 83 épouse le berceau 43. Cela réduit également le risque de détérioration de la membrane 83.

Le diaphragme 80 peut être élastiquement déformé vers une forme en étirement particulière, dite « forme en étirement distale » et montrée sur les figures 2 et 3, non seulement lorsqu'une surpression survient dans la chambre 25, mais aussi que le piston 50 est en position distale. Dans cette forme en étirement distale, seule une partie proximale 86 de la membrane 83 est en contact avec, et épouse, le berceau 43, alors qu'une partie distale 87 est en contact avec, et épouse la tige 52, pour la partie 51 qui dépasse de l'extrémité 36 du conduit 33. Vu la position distale du piston 50, la partie 51 s'étend alors axialement entre le berceau annulaire 43, en particulier l'extrémité 36, et le jonc annulaire interne 82, en particulier la gorge 58.

Plus en détails, la partie proximale 86 est de forme annulaire et s'étend du jonc 81 à la partie distale 87. La partie distale 87 est de forme annulaire et s'étend de la partie proximale au jonc 82. De préférence, la partie distale 87 et la partie proximale 86 représentent chacune environ la moitié de l'aire de la membrane 83. De préférence, quasiment toute la partie distale 87 est en contact avec la partie 51 de la tige 52. De préférence, quasiment toute la partie proximale 86 est en contact avec le berceau 43. De même, quasiment tout le berceau 43, du bord 42 à l'extrémité 36, est en contact avec la membrane 83. De même, quasiment toute la partie 51 de la tige 52 qui émerge du conduit 33, de l'extrémité 36 à au bord 56, est en contact avec la membrane 83. Eventuellement, une partie de la membrane 83 située à la frontière entre les parties distale 87 et proximale 86 n'est pas plaquée contre le berceau 43 ou la tige 52, au niveau de l'extrémité 36.

Le fait que la membrane 83 épouse à la fois la partie 51 de la tige 52 et le berceau 43 dans cette situation réduit les risques de détérioration de la membrane 83.

Le diaphragme 80 peut être élastiquement déformé vers une forme en étirement particulière, dite « forme en étirement proximale » et montrée sur la figure 4, non seulement lorsqu'une surpression survient dans la chambre 25, mais aussi que le piston 50 est en position proximale. Dans ce cas, la partie 51 de la tige 52 est escamotée à l'intérieur du conduit 33. De préférence, dans ce cas, quasiment toute la membrane 83 est en contact avec le berceau 43. De même, quasiment tout le berceau 43, du bord 42 à l'extrémité 36, est en contact avec la membrane 83. En particulier, les parties proximale 86 et distale 87 sont toutes deux en contact avec le berceau 43, préférentiellement quasi-entièrement. Le fait que la membrane 83 épouse presque entièrement le berceau 43 dans cette situation réduit les risques de détérioration de la membrane 83.

Dans sa forme initiale, on préfère que la membrane annulaire 83 soit convexe en direction du berceau annulaire 43, c'est-à-dire présente une courbure dont le dos est dirigé vers le berceau annulaire 43 comme montré sur la figure 1. Cette courbure initiale assure que la membrane 83 va adopter les autres formes décrites ci-avant lorsqu'une surpression survient. On prévoit avantageusement que, lorsque le diaphragme 80 est dans la forme initiale, aucune des parties 86 et 87 n'est en contact avec le berceau 43 et la tige 52, hormis éventuellement avec les bords 42 et 56.

De préférence, dans toutes les formes que peut prendre le diaphragme 80 lors de l'utilisation de la vanne, ou au moins pour les formes en étirement, on prévoit avantageusement qu'aucune surface de la membrane annulaire 83 ne vient en contact avec une autre surface de la membrane annulaire 83. Autrement dit, la membrane annulaire 83 n'est pas pliée au point de venir en contact contre elle-même, ce qui permet de réduire le risque de détérioration de la membrane 83. Plus généralement, on peut prévoir qu'aucune pliure de la membrane 83 ne survient, grâce aux formes initiale et en étirement susmentionnée, notamment par mise en appui de la membrane 83 contre le berceau 43 pour les formes en étirement, la forme du berceau 43 étant spécifiquement configurée pour éviter une pliure franche de la membrane 83.

En l'absence de surpression et alors que le piston 50 est en position proximale, la membrane 83 adopte avantageusement la même forme que la forme en étirement proximale. Toutefois, on peut prévoir que la membrane 83 adopte une forme intermédiaire différente, notamment dans laquelle la membrane 83 ne vient pas entièrement en contact avec le berceau 43.

Encore d'autres formes en étirement peuvent être obtenues, lorsque la surpression survient et que le piston 50 est dans une position intermédiaire entre la position distale et la position proximale. Par ailleurs, dans toutes les situations intermédiaires où, soit une surpression trop faible survient, soit le piston 50 n'est pas en position distale, soit les deux, le diaphragme 80 peut adopter une forme intermédiaire respective, qui n'est ni la forme initiale ni l'une des formes en étirement telles que décrites ci-avant.

Que le piston 50 soit dans la position proximale ou distale, le pointeau 90 est disposé, de préférence entièrement, dans la chambre 25, hors du conduit central 33, en étant décalé dans la direction distale X50 par rapport à l'extrémité distale de corps 31. Le pointeau 90 est fixé à la tige 52, par l'extrémité distale de tige 59. Le pointeau 90 est une pièce distincte de la tige 52, qui est fixé à la tige 52 en étant rapporté sur la tige 52. L'extrémité distale de tige 59 débute à partir de la gorge de piston 58, dans la direction X50 et est avantageusement coaxiale avec l'axe X3. En position proximale du piston 50, le pointeau 90 est distant du siège 27 pour laisser circuler le flux F21, et, en position de distale du piston 50, est en appui axial contre le siège 27 pour obturer le conduit 22 et empêcher la circulation du flux F21.

Plus en détails, le pointeau 90 comprend avantageusement une extrémité distale d'obturation 91, une interface proximale de fixation 92 et une couronne 93, qui constituent ensemble avantageusement une pièce monobloc d'un seul tenant.

Le pointeau 90 est fixé à l'extrémité distale de tige 59 par l'interface proximale de fixation 92. De préférence, l'interface proximale de fixation 92 se présente sous la forme d'un conduit interne centré sur l'axe X3, débouchant en sens opposé de la direction distale X50, recevant en son sein l'extrémité distale de tige 59 de façon emmanchée suivant la direction distale X50. De préférence, la fixation est obtenue par un emmanchement en force du pointeau 90 sur la tige 52, en particulier de l'interface 92 sur l'extrémité distale 59. Comme montré aux figures, on prévoit avantageusement que l'extrémité distale 59 présente des griffes, disposées à la périphérie de l'extrémité 59, et qui sont radialement implantées dans l'interface 92 pour retenir le pointeau 90 en sens opposé de la direction distale X50. En variante, à la place d'un emmanchement du pointeau 90 sur l'extrémité distale de tige 59, on peut prévoir un vissage du pointeau 90 sur l'extrémité distale de tige 59. Alors, l'interface proximale de fixation 92 porte un filetage intérieur et l'extrémité distale de tige 59 porte un filetage extérieur complémentaire avec le filetage intérieur pour que ce vissage puisse être effectué.

L'extrémité d'obturation 91 s'étend dans la direction distale à partir de l'interface 92 et de l'extrémité 59. L'extrémité d'obturation 91 est préférentiellement de forme convexe, ou en forme de bouchon dans la direction X50. Lorsque la tige 52 est dans la position distale comme montré sur les figures 1 à 3, l'extrémité 91 vient en appui suivant la direction distale X50 contre le siège d'obturation 27, pour ainsi obturer le siège d'obturation 27. Le conduit 22 se trouve alors fluidiquement séparé de la chambre 25, empêchant l'établissement du flux F21. Lorsque la tige 52 est dans la position proximale comme montré sur la figure 4, l'extrémité 91 est en retrait par rapport au siège d'obturation 27 en sens opposé de la direction X50, pour ainsi libérer le siège d'obturation 27. Le conduit 22 se trouve alors fluidiquement connecté à la chambre 25, de sorte que le flux de fluide F21 peut s'établir.

La couronne 93 est formée à une extrémité proximale du pointeau 90, c'est-à-dire axialement à l'opposé de l'extrémité d'obturation 91. Le fond du conduit interne de l'interface 92 est agencé entre la couronne 93 et l'extrémité 91. La couronne 93 entoure la tige 52 sur tout son pourtour, à hauteur de la gorge 58, et recouvrant extérieurement le jonc annulaire interne 82, alors que le jonc annulaire interne 82 est radialement interposé entre la couronne 93 et la gorge 58.

Plus en détails, la couronne 93 comprend une embase 94 et un bord de couronne 95. De préférence, la couronne 93 forme, sur l'intérieur de la couronne 93, successivement en sens opposé de la direction distale X50, un chanfrein intérieur 96, une surface courbe concave intérieure 97, puis une surface conique intérieure 98, comme indiqué sur la figure 3. Ces surfaces 96, 97 et 98 constituent ensemble une paroi interne évasée continue, entourant la tige 52.

L'embase 94 débute avantageusement à une extrémité proximale de l'interface 92. Autrement dit, la couronne 93 s'étend en sens opposé de la direction X50 à partir du conduit interne formé par l'interface 92. Le bord de couronne 95, disposé en sens opposé de la direction distale X50 par rapport à l'embase 94, constitue avantageusement une extrémité proximale du pointeau 90 et de la couronne 93.

L'embase 94 connecte la couronne 93 à l'extrémité distale d'obturation 91 et débute à une extrémité proximale de l'interface 92. L'embase 94, qui est de forme annulaire entourant la tige 52. En sens opposé de la direction X50, l'embase 94 débute en étant adjacente avec le bord distal de gorge 57, et se prolonge en sens opposé de la direction X50 en s'éloignant de la tige 52, radialement vers l'extérieur, jusqu'au bord de couronne 95, qui termine la couronne 93 en sens opposé de la direction X50 en étant radialement distant de la tige 52. Le bord de couronne 95, préférentiellement de forme circulaire, s'étend tout autour de la tige 52, dans un plan orthogonal à l'axe X3. Le bord de couronne 95 est agencé à hauteur du bord proximal de gorge 56, c'est-à-dire, au même niveau que le bord proximal de gorge 56 suivant l'axe X3. La couronne 93 recouvre ainsi entièrement la gorge 58 en s'étendant radialement à distance de la gorge 58, à partir du bord distal 57 où la couronne 93 est adjacente au bord distal 57.

Le chanfrein intérieur 96 converge suivant la direction distale X50 et est adjacent au bord distal de gorge 57. Le chanfrein 96 permet d'éviter qu'un bord coupant soit formé au niveau de la frontière entre le pointeau 90 et la tige 52, évitant ainsi un risque de détérioration jonc 82 à l'usage.

La surface courbe concave intérieure 97, de forme arrondie en creux, relie l'embase 94 au bord de couronne 95, en particulier relie le chanfrein 96 à la surface conique intérieure 98. La surface 97 débute à partir du chanfrein 96, de sorte que le bord distal de gorge 57 est décalé dans la direction X50 par rapport au début de la surface 97. La surface courbe concave intérieure 97 converge suivant la direction distale X50.

La surface conique intérieure 98 relie l'embase 94 au bord de couronne 95, en particulier relie la surface courbe concave intérieure 97 au bord de couronne 95. La surface 98 converge suivant la direction distale X50.

Le jonc annulaire interne 82 étant reçu dans la gorge 58, il est interposé entre la couronne 93 et la tige 52, radialement par rapport à l'axe X3, en étant en contact avec la couronne 93, préférentiellement sur tout ou l'essentiel de sa hauteur. En particulier, le jonc 82 est en contact avec les surfaces 97 et 98. La couronne 93 est en appui oblique en sens opposé de la direction distale X50 contre le jonc annulaire interne 82 par l'intermédiaire de la surface courbe concave intérieure 97. Cet appui oblique permet un maintien du jonc 82 par le pointeau 90 dans la gorge 58, afin que le jonc 82 soit maintenu fixé à la tige 52. La couronne 93 est en appui oblique en sens opposé de la direction distale X50 contre le diaphragme 80, en particulier contre le jonc 82, par l'intermédiaire la surface conique intérieure 98. Cela contribue au maintien du jonc 82 dans la gorge 58.

La partie distale 87 de la membrane 83, par l'intermédiaire de laquelle la membrane 83 est rattachée au jonc 82, est interposée entre le bord proximal de gorge 56 et le bord de couronne 95, radialement par rapport à l'axe X3, en étant en contact avec le bord de couronne 95. Plus généralement, le diaphragme 80 est radialement interposé entre le bord proximal de gorge 56 et le bord de couronne 95, en étant en contact avec le bord de couronne 95.

Autrement dit, le diaphragme 80 est en appui contre la couronne 93 pour toute la surface du diaphragme 80 qui est radialement interposée entre la couronne 93 et la tige 52, notamment au niveau du bord de couronne 95, et éventuellement hormis à une extrémité distale du jonc 82 au niveau du bord 57. De préférence, le bord de couronne 95 est maintenu en contact avec le diaphragme 80, que le diaphragme 80 soit dans la forme initiale, dans l'une des formes en étirement, ou dans toute autre forme durant son utilisation. De préférence, le bord de couronne 95 est maintenu en contact avec le diaphragme 80, que le piston 50 soit en position distale, en position proximale, ou dans toute position intermédiaire. Le maintien de cet appui entre le bord de couronne 95 et le diaphragme 80, tout autour de l'axe X3, évite l'ouverture de tout interstice annulaire entre le diaphragme 80 et le pointeau 90, ce qui évite l'introduction et l'accumulation de résidus ou autre matériaux entre le diaphragme 80 et la couronne 93. Pour assurer le maintien du contact entre le bord de couronne 95 et le diaphragme 80 dans toutes ces situations, on prévoit que, lorsque le pointeau 90 est fixé, la couronne 93 est enfoncée sur le diaphragme 80 de façon à appliquer un effort en sens opposé de la direction X50, de sorte à maintenir le diaphragme 80 dans une configuration élastiquement déformée, en compression en sens opposé de la direction X50. En particulier, on prévoit que le jonc 82 et la partie 87 de la membrane 83 soient maintenus dans cet état élastiquement déformé par appui oblique des surfaces 96 et 97 et du bord 95 contre le jonc 82 et la partie 87 de la membrane 83.

De préférence, la tige 52 comprend une embase proximale 53 et une collerette 55, qui sont à une extrémité proximale de la tige 52, à l'opposé de la partie 51 et du pointeau 90. Entre, d'une part, l'embase 53 et la collerette 55 et, d'autre part, la partie 51 et le pointeau 90, la tige 52 traverse la chambre intermédiaire 37 et la chambre de commande 38 du conduit central 33. La collerette 55 sépare la chambre de commande 38 de la chambre proximale 39. L'embase proximale 53, formée à une extrémité proximale du piston 50, est opposée au pointeau 90. L'embase proximale 53 est disposée dans la chambre proximale 39.

La vanne 3 comprend avantageusement un ressort 54, qui exerce un effort de rappel élastique sur le piston 50, ici par l'intermédiaire de l'embase proximale 53, en prenant appui sur le corps 30. L'effort de rappel élastique tend à déplacer le piston 50 dans la direction X50, de sa position proximale à sa position distale. De préférence, le ressort 54 est disposé à l'intérieur du corps 30, ici dans la chambre proximale 39, autour du piston 50.

La chambre de commande 26, délimitée par la base 2, est fluidiquement reliée à la chambre de commande 38 formée à l'intérieur du corps 30. Pour cela, le corps 30 ménage un ou plusieurs conduits, non représentés, reliant les chambres 26 et 38 lorsque le corps 30 est monté sur la base 2. Le fluide de commande peut donc envahir les chambres de commande 26 et 38, et ainsi exercer un effort de pression sur la collerette 55 par mise en pression de la chambre 38, tendant à déplacer le piston 50 de la position distale vers la position proximale, à l'encontre de l'effort développé par le ressort 54. L'application de l'effort de pression par mise sous pression avec du fluide de commande met le piston 50 en position proximale et le relâchement de l'effort de pression par abaissement de la pression de fluide de commande autorise le ressort 54 à ramener le piston 50 en position de distale. L'ouverture et la fermeture de la vanne 3 peuvent ainsi être commandées.

Comme la chambre périphérique 28, la chambre intermédiaire 37 constitue également une chambre d'évent. De préférence, la chambre périphérique 28 est fluidiquement reliée à la chambre intermédiaire 37 par un ou plusieurs conduits ménagés dans le corps 30, pour que ces chambres 28 et 37 constituent ensemble la chambre d'évent. En cas de défaillance de l'un des joints, ou du jonc 81, du fluide pressurisé ou du fluide de commande peut s'échapper vers les chambres 28 et 37 au travers du joint défaillant pour éviter d'envahir le reste de la vanne 3.

Le piston 50 et le diaphragme 80 peuvent être considérés de façon groupée, comme un ensemble piston-diaphragme, appartenant à la vanne 3. Durant la fabrication de la vanne 3, l'ensemble piston-diaphragme est préférentiellement installé dans le corps 30 alors que, dans l'ensemble piston-diaphragme, le jonc 82 est déjà reçu dans la gorge 58 de la tige 52 et alors que le pointeau 90 est déjà fixé sur la tige 52. Cela implique d'introduire le piston 50 dans le conduit central 33 puis de fixer le jonc 81 dans la gorge 40. Le corps 30 est ensuite installé dans l'alésage 20 de la base 2. De façon similaire, pour la maintenance, on peut prévoir de remplacer l'ensemble piston-diaphragme en entier, en retirant d'un seul bloc l'ensemble piston-diaphragme usé hors du corps 30, puis en remontant l'ensemble piston-diaphragme réparé, ou un nouvel ensemble piston-diaphragme, d'un seul bloc dans le corps 30.

Pour fabriquer l'ensemble piston-diaphragme, on met en oeuvre un procédé de fabrication qui comprend plusieurs étapes décrites ci-après.

Dans un premier temps, on fournit la tige 52, le pointeau 90 et le diaphragme 80 dans une configuration où ces pièces sont séparées les unes des autres.

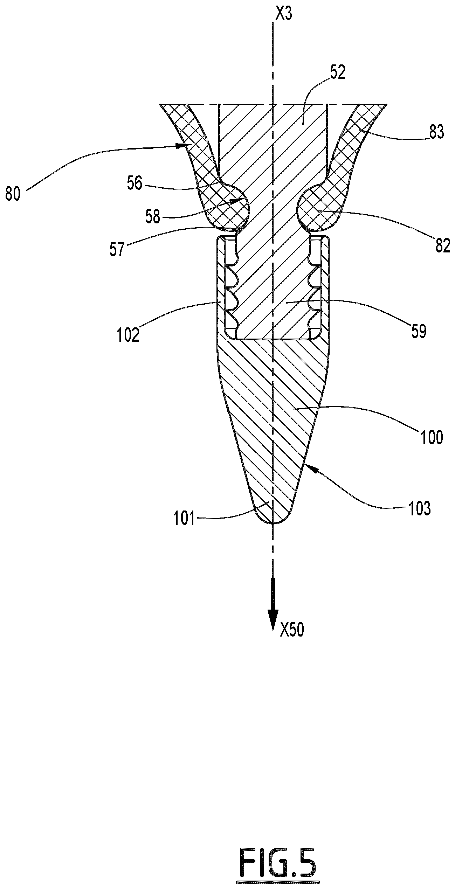

Ensuite, comme montré sur la figure 5, le procédé comprend avantageusement un positionnement d'un capuchon provisoire 100 sur l'extrémité distale de tige 59. A ce stade, le pointeau 90 n'est pas encore fixé sur la tige 52 et le jonc annulaire interne 82 du diaphragme 80 n'est pas encore enfilé sur la tige 52.

Le capuchon provisoire 100 comprend avantageusement une embase proximale 102, par l'intermédiaire de laquelle le capuchon 100 est fixé à l'extrémité distale de tige 59. De préférence, l'embase proximale 102 comprend un alésage ouvert en sens opposé de la direction X50 pour recevoir l'extrémité 59 en son sein, l'extrémité 59. L'embase proximale 102 recouvre ainsi l'extrémité 59, de préférence entièrement, notamment en recouvrant les griffes éventuellement prévues à l'extrémité 59. De préférence l'embase 102 s'étend jusqu'au bord distal 57 de la gorge 58, lorsque le capuchon 100 est positionné. Extérieurement, l'embase 102 présent préférentiellement une forme cylindrique à base circulaire, centrée sur l'axe X3.

Le capuchon provisoire 100 comprend avantageusement une extrémité distale 101 de forme fuselée suivant la direction distale X50, centrée sur l'axe X3, et dont une pointe extrémale est avantageusement arrondie. De préférence, l'extrémité 101 forme une surface fuselée externe 103, qui est ici conique. La surface 103 est convergente suivant le direction distale X50. L'extrémité 101 converge dans la direction X50. L'extrémité 101 prolonge la forme extérieure de l'embase 102, de sorte que, extérieurement, le capuchon 100 soit entièrement fuselé, par exemple avec une forme générale cylindro-conique.

Le procédé comprend ensuite un enfilement du jonc annulaire interne 82 sur la tige 52, alors que le pointeau 90 n'est toujours pas fixé sur la tige et alors que le capuchon 100 est en place sur la tige 52. L'enfilement du jonc annulaire interne 82 est effectué via l'extrémité distale 59, jusqu'à ce que le jonc annulaire interne 82 soit reçu dans la gorge de piston 58, afin d'attacher le diaphragme 80 à la tige 52. Puisque le capuchon 100 est installé, cet enfilement du jonc annulaire interne 82 sur la tige 52 est effectué par l'intermédiaire du capuchon provisoire 100, avec coulissement du jonc annulaire interne 82 le long de la surface fuselée externe 103 du capuchon provisoire, en sens opposé de la direction X50. L'utilisation de ce capuchon 100 facilite l'enfilement du jonc 82, en ce que le jonc 82 peut facilement être traversé par l'extrémité pointue du capuchon provisoire 100, puis être progressivement élastiquement écarté au fur et à mesure de sa progression le long de la surface fuselée externe 103, puis enfin élastiquement revenir à une forme plus resserrée une fois le capuchon 100 franchi, pour être reçu dans la gorge 58. Le capuchon 100 permet aussi avantageusement que les griffes portées par l'extrémité 59 ne détériorent le jonc 82.

Le procédé comprend ensuite un retrait du capuchon provisoire 100, alors que le jonc annulaire interne 82 est reçu dans la gorge 58, et avant fixation du pointeau 90 sur l'extrémité distale de tige 59.

Le procédé comprend ensuite, alors que le jonc annulaire interne 82 est reçu dans la gorge 58 et que le capuchon provisoire 100 a été retiré, une fixation du pointeau 90 sur l'extrémité distale de tige 59. Pour cela, on emmanche le pointeau 90 sur la tige 52, en emmanchant en force l'interface proximale de fixation 92 sur l'extrémité de tige 59, en sens opposé de la direction X50. Les griffes de l'extrémité de tige 59, si elles sont prévues, empêchent alors un retrait du pointeau 90. La fixation du pointeau 90 est effectuée de façon à ce que la couronne 93 entoure la tige 52 en recouvrant extérieurement le jonc annulaire interne 82, que l'embase 94 soit adjacente avec le bord distal de gorge 57, et que le diaphragme 80 soit radialement interposé entre le bord proximal de gorge 56 et le bord de couronne 95, en étant en contact avec le bord de couronne 95, comme décrit ci-avant.

Toute caractéristique décrite ci-avant pour l'un des modes de réalisation ou variante peut être mise en oeuvre pour les autres modes de réalisation et variantes décrits ci-avant, pour autant que techniquement possible.

## Revendications

1. Ensemble piston-diaphragme, pour une vanne (3), l'ensemble comprenant :
- un piston (50), comprenant :
• une tige (52), qui s'étend parallèlement à une direction distale (X50), la tige (52) étant destinée à être reçue dans un conduit central (33) d'un corps (30) de la vanne (3), de façon coulissante par rapport au corps (30) parallèlement à la direction distale (X50), la tige (52) comprenant une gorge de piston (58), entourant la tige (52) et étant ouverte radialement vers l'extérieur, la gorge de piston (58) comprenant un bord proximal de gorge (56) et un bord distal de gorge (57) entre lesquels la gorge de piston (58) est délimitée, le bord distal de gorge (57) étant décalé dans la direction distale (X50) par rapport au bord proximal de gorge (56), et
• un pointeau (90), qui est fixé sur une extrémité distale de tige (59), appartenant à la tige (52), et qui est configuré pour venir en appui contre un siège d'obturation (27) suivant la direction distale (X50) pour obturer un conduit de fluide pressurisé (22) ; et
- un diaphragme (80), comprenant :
• un jonc annulaire périphérique (81), pour attacher le diaphragme (80) au corps (30) de la vanne (3), le jonc annulaire périphérique (81) entourant le piston (50),
• un jonc annulaire interne (82), qui entoure le piston (50) et qui est reçu dans la gorge de piston (58) pour ainsi attacher le diaphragme (80) au piston (50), et
• une membrane annulaire (83), qui relie le jonc annulaire périphérique (81) au jonc annulaire interne (82) ;
**caractérisé en ce que** le pointeau (90) comprend une couronne (93), qui entoure la tige (52) en recouvrant extérieurement le jonc annulaire interne (82) et qui comprend un bord de couronne (95), qui termine la couronne (93) en sens opposé de la direction distale (X50), le bord de couronne (95) étant agencé à hauteur du bord proximal de gorge (56), le diaphragme (80) étant radialement interposé entre le bord proximal de gorge (56) et le bord de couronne (95), en étant en contact avec le bord de couronne (95).

2. Ensemble piston-diaphragme selon la revendication 1, dans laquelle la couronne comprend une embase (94), qui est adjacente au bord distal de gorge (57).

3. Ensemble piston-diaphragme selon la revendication 2, dans lequel la couronne (93) comprend une surface conique intérieure (98), qui relie l'embase (94) au bord de couronne (95), qui converge suivant la direction distale (X50), la couronne (93) étant en appui oblique en sens opposé de la direction distale (X50) contre le diaphragme (80) par l'intermédiaire la surface conique intérieure (98).

4. Ensemble piston-diaphragme selon l'une quelconque des revendications 2 ou 3, dans lequel la couronne (93) comprend une surface courbe concave intérieure (97), qui relie l'embase (94) au bord de couronne (95), qui converge suivant la direction distale (X50), la couronne (93) étant en appui oblique en sens opposé de la direction distale (X50) contre le jonc annulaire interne (82) par l'intermédiaire de la surface courbe concave intérieure (97).

5. Ensemble piston-diaphragme selon l'une quelconque des revendications 2 à 4, dans lequel la couronne (93) comprend un chanfrein intérieur (96) qui converge suivant la direction distale (X50), et qui est adjacent au bord distal de gorge (57).

6. Ensemble piston-diaphragme selon l'une quelconque des revendications précédentes, dans lequel le pointeau (90) comprend une interface proximale de fixation (92), formant un conduit interne, par l'intermédiaire duquel le pointeau (90) est fixé à la tige (52), préférentiellement par emmanchement de l'extrémité distale de tige (59) dans l'interface proximale de fixation (92) suivant la direction distale (X50), la couronne (93) s'étendant à partir de l'interface proximale de fixation (92), en sens opposé de la direction distale (X50).

7. Ensemble piston-diaphragme selon l'une quelconque des revendications précédentes, dans lequel le bord proximal de gorge (56) est radialement plus large que le bord distal de gorge (57).

8. Ensemble piston-diaphragme selon l'une quelconque des revendications précédentes, dans lequel la gorge de piston (58) présente une section radiale en portion de cercle, du bord distal de gorge (57) au bord proximal de gorge (56).

9. Vanne (3), comprenant l'ensemble piston-diaphragme selon l'une quelconque des revendications précédentes et dans laquelle :
- la vanne (3) comprend un corps (30), ayant un conduit central (33) coaxial avec un axe central (X3) et débouchant à une extrémité distale de corps (31) appartenant au corps (30) ;
- le piston (50) est coulissant par rapport au corps (30) suivant l'axe central (X3), entre une position distale et une position proximale, la direction distale (X50) du piston (50) étant parallèle à l'axe central (X3) ;
- la tige (52) est reçue dans le conduit central (33), en dépassant du conduit central (33) à partir de l'extrémité distale de corps (31) lorsque le piston (50) est dans la position distale ;
- le pointeau (90) est agencé hors du conduit central (33), en étant décalé dans la direction distale (X50) par rapport à l'extrémité distale de corps (31), que le piston (50) soit dans la position proximale ou dans la position distale ;
- le jonc annulaire périphérique (81) attache le diaphragme (80) à l'extrémité distale de corps (31) ;
- le diaphragme (80) sépare le conduit central (33) d'une chambre de fluide pressurisé (25) délimitée par-delà le diaphragme (80) dans la direction distale (X50), et est configuré pour être élastiquement déformé entre :
• une forme initiale, lorsque le piston (50) est dans la position distale et qu'aucune surpression ne survient dans la chambre de fluide pressurisé (25) par rapport au conduit central (33), et
• des formes en étirement, sous l'effet d'une surpression survenant dans la chambre de fluide pressurisé par rapport au conduit central (33) ; et
- le bord de couronne (95) est en contact avec le diaphragme (80), que le diaphragme (80) soit dans la forme initiale ou dans l'une des formes en étirement, et que le piston (50) soit en position distale ou en position proximale.

10. Procédé de fabrication de l'ensemble piston-diaphragme selon l'une quelconque des revendications 1 à 8, le procédé comprenant :
- enfilement du jonc annulaire interne (82) sur la tige (52), alors que le pointeau (90) n'est pas encore fixé sur la tige (52), l'enfilement du jonc annulaire interne (82) étant effectué via l'extrémité distale de tige (59) et jusqu'à ce que le jonc annulaire interne (82) soit reçu dans la gorge de piston (58) pour attacher le diaphragme (80) à la tige (52) ; et
- alors que le jonc annulaire interne (82) est reçu dans la gorge de piston (58), fixation du pointeau (90) sur l'extrémité distale de tige (59), de sorte que :
• la couronne (93) entoure la tige (52) en recouvrant extérieurement le jonc annulaire interne (82), et
• le diaphragme (80) soit radialement interposé entre le bord proximal de gorge (56) et le bord de couronne (95), en étant en contact avec le bord de couronne (95).

11. Procédé selon la revendication 10, comprenant :
- positionnement d'un capuchon provisoire sur l'extrémité distale de tige (59), alors que le pointeau (90) n'est pas encore fixé sur la tige (52) et que le jonc annulaire interne (82) n'est pas encore enfilé sur la tige (52), le capuchon provisoire recouvrant l'extrémité distale de tige (59), l'enfilement du jonc annulaire interne (82) sur la tige (52) étant effectué par l'intermédiaire du capuchon provisoire, avec coulissement du jonc annulaire interne (82) le long d'une surface fuselée externe du capuchon provisoire, la surface fuselée externe étant convergente suivant la direction distale (X50) ; et
- retrait du capuchon provisoire, alors que le jonc annulaire interne (82) est reçu dans la gorge de piston (58) et avant la fixation du pointeau (90) sur l'extrémité distale de tige (59).
